# EUROPEAN PATENT SPECIFICATION

(11) **EP 2 016 538 B1**
(45) Date of publication and mention of the grant of the patent: **01.07.2015**
(21) Application number: 07730705.6
(22) Date of filing: 24.04.2007
(51) Int. Cl.: G06K 19/077, H01Q 1/38, H01Q 23/00, H01Q 1/52, G06K 19/04, H01Q 1/22, H01Q 1/42, H01Q 9/16, H01Q 9/04

(54) **RFID TRANSPONDER AND ITS BLANK AND METHOD OF CONSTRUCTION FOR MANUFACTURING THE RFID TRANSPONDER**
RFID-TRANSPONDER UND ROHLING DAFÜR UND VERFAHREN ZUR KONSTRUKTION ZUR HERSTELLUNG DES RFID-TRANSPONDERS
TRANSPONDEUR RFID ET SON EBAUCHE ET PROCEDE DE FABRICATION DU TRANSPONDEUR RFID

(30) Priority: 28.04.2006 FI 20065279
(43) Date of publication of application: 21.01.2009
(73) Proprietor: Wisteq Oy, 01620 Vantaa (FI)
(72) Inventor: MERILÄINEN, Olavi, 40720 Jyväskylä (FI); SEPPÄ, Heikki, 00370 Helsinki (FI)
(74) Representative: Helke, Kimmo Kalervo
(86) International application number: PCT/FI2007/050218
(87) International publication number: WO 2007/125164

(56) References cited:
- WO-A1-99/65002
- WO-A1-2004/093249
- WO-A1-2004/093249
- WO-A1-2005/048181
- WO-A1-2007/000807
- FI-A- 20 050 507
- US-A1- 2004 196 190
- US-A1- 2004 196 190
- US-A1- 2005 275 591
- US-A1- 2006 267 843

## Description

The present invention relates to an RFID transponder, which includes a radiator and a ground element as opposed antenna elements, a ground plane intended to be set against a base at a distance from the radiator, and an electrical chip component, and in which the ground plane is on the first plane and the radiator is on the second plane, at a distance from the first plane, and in which the chip component is connected to the radiator and the ground element, and further in which the said radiator, ground element, and chip component are installed on a foil. The invention also relates to a blank for the transponder. Here, the term RFID transponder refers mainly to a UHF-range passive transponder equipped with an RFID chip, but other applications too may be considered. Such RFID transponders operate using so-called backscatter technology. In this connection, reference is also made to so-called micro-strip antennae.

A passive RFID transponder is a small device comprising an antenna, microcircuit, and memory, which uses backscattering to transmit the contents of its memory when it receives a transmission command from a reading device and the reading device illuminates it with a radio signal. A passive transponder has no battery, but instead draws its operating power from the radio signal transmitted to it by the reader. The transmission of power and information between the transponder and the reader can take place with the aid of a magnetic field, an electric field, or a radiating radio signal. Active transponders have a battery and somewhat simpler operation, as power transmission is not needed.

Patent application publication US2004/0005754 A1 discloses one 'smart label' construction and a method for manufacturing it. Though the example in the publication concerns an inductively connecting RFID transponder, the same type of construction can also be applied to transponders operating at a radio frequency, which latter have a substantially greater range than the former. In the publication, polycarbonate, polyolefin, polyester, polyethylene terephthalate (PET), polyvinylchloride (PVC), and acrylonitrile/butadiene-styrene copolymer are presented as materials of the base web.

A challenge in RFID transponders operating in the UHF range is to make them operate reliably even on conductive surfaces. This is because the electrical properties of the antenna also depend on the properties of the installation surface. The effect of the base can be reduced sufficiently by equipping the transponder with a separate conductive shielding plane, above which the antenna is raised slightly. Another possibility is to use so-called PIFA (Planar Inverted F-antenna) antennae, in which the ground element of the antenna is formed of a sufficiently large surface area below the radiator. The totality is then less sensitive to the properties of the base and the transponder can generally be made to function on a conductive surface.

The manufacture of an PIFA antenna is difficult and expensive, particularly relating to the vias, due to the complexity of the construction. VTT (the Technical Research Centre of Finland) has published a basic solution (WO 2006/120287A1) for a so-called PAFFA antenna, which is intended to solve the problems relating to PIFA antennae. According to the abstract of the publication, a special folding technique in the antenna base is used to replace the vias of a PIFA antenna.

Patent application US 2004/196190 A1 discloses Lightweight, small antennas that have decreased material and fabrication/processing cost. The antennas may be used in consumer electronics products such as cellular phones, laptops and PDA's. Some of the antennas and fabrication techniques also provide lower part count and increased reliability. All antennas are fabricated with standard materials currently available in high volume production.

Patent application WO 2004/093249 A1 discloses A radio frequency identification (RFID) tag that includes an antenna configuration coupled to an RFID chip, such as in an RFID strap. The antenna configuration is mounted on one face (major surface) of a dielectric material, and includes compensation elements to compensate at least to some extent for various types of dielectric material upon which the antenna configuration may be mounted. In addition, a conductive structure, such as a ground plane or other layer of conductive material, may be placed on a second major surface of the dielectric layer, on an opposite side of the dielectric layer from the antenna structure.

The present invention is intended to create a mechanical solution for reliably supporting the structures of an RFID transponder. The characteristic features of the transponder according to the invention are stated in the accompanying Claims 1. A blank for the transponder according to the invention is presented in Claim 9.

The invention can be applied to both RFID transponders equipped with a separate ground plane, and to transponders equipped with a newer PAFFA-type antenna structure. In one embodiment, the folded foil is supported on a special spacer piece, which keeps the planes of the foil at a distance to each other. In a second embodiment of the invention, the foil is supported directly on the side walls of the case. The solution applies generally to an antenna structure for a two-terminal antenna connection. A PAFFA antenna structure comprises a ground plane on the first surface, at least one transmission line on the second surface, connected to the ground plane through a fold in the edge of the antenna structure, in which case the fold acts as the primary source of the magnetic field, an insulator layer arranged between the first and second surface, and an electronic component, in which there is a two-terminal antenna, connected to the antenna structure. According to the solution, the electronic component is attached to the second surface of the antenna structure and connected from one of the antenna terminals to the transmission line and from the other terminal to either a second transmission line or to the fold.

Other embodiments and benefits of the invention are described hereinafter, in connection with examples of applications, which are shown in the accompanying drawings, in which
- Figures 1a - 1c: show the construction and assembly of one RFID transponder according to the invention,
- Figures 2a and 2b: show a second assembly of the RFID transponder, and
- Figures 3a - 3c: show a blank for an RFID transponder, manufactured using the injection moulding technique, and its assembly.

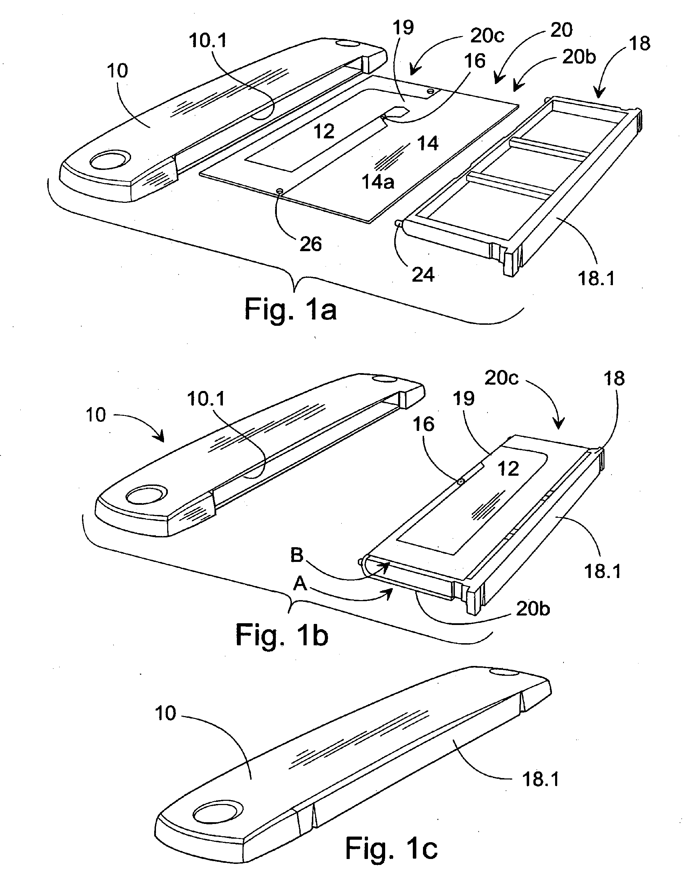

In the embodiment of Figure 1a - 1c, the main components of the RFID transponder are a case 10, a foil 20, and an intermediate frame 18. There is an opening 10.1 in the side wall of the case 10 for the installation to be described later. The foil 20 is manufactured in some known manner and in it there are, as electrical elements, an electronic chip (RFID), radiator 12, ground element 14, which in this case also forms the ground plane 14a. The ground element 14 is connected by a transmission line 19 to the radiator at a distance from the feed point of the chip. The construction of the antenna element does not actually come within the scope of the present invention. Here, the frame 18 is for installing the foil 20. In the frame 18, there is a wall 18.1 covering the opening. To facilitate the installation of the foil, the front edge of the frame includes pins 24, with corresponding holes 26 in the foil, with the aid of which the foil can be precisely aligned as desired.

In the foil 20, there is a first part 20b, a fold 20a, and a second part 20c. When the foil 20 is folded on top of the frame 18 according to Figure 1b, the first part 20b remains on the first plane A and the second part 20c remains on the second plane B. Thus, the frame 18 with the foil 20 can be pushed in, Figure 1c. The joints can be, for example, welded using ultrasound, in order to create an airtight structure.

In this case, the foil 20, together with its insulation, folded to its final form, forms an RFID transponder with advantageous electrical properties. The length of the radiator is approximately λ/4 (ε = 1, i.e. the air gap). At the example of a frequency of 867 MHz, the vertical-angle length from the free end of the radiator 12 to the middle of the transmission line 19 is 66 mm in the example according to the figure, in which the gap between the planes is 4 mm. It should be noted that the chip 16 is attached to the ground element 14 over a considerably shorted conductor length than λ/4. In this electrical application, the chip 16 is attached to the edge of the radiator at a point that corresponds to the impedance of the chip. In this relation, the location of the chip does not greatly affect the resonance frequency. According to Figure 1b, the chip 16 remains on the same side as the radiator 12. The length of the electrical parts of the foil, in the direction of the fold, is preferably 4/√ε - 15/√ε (cm), in which ε is the dielectric value of the substance between the first and second planes.

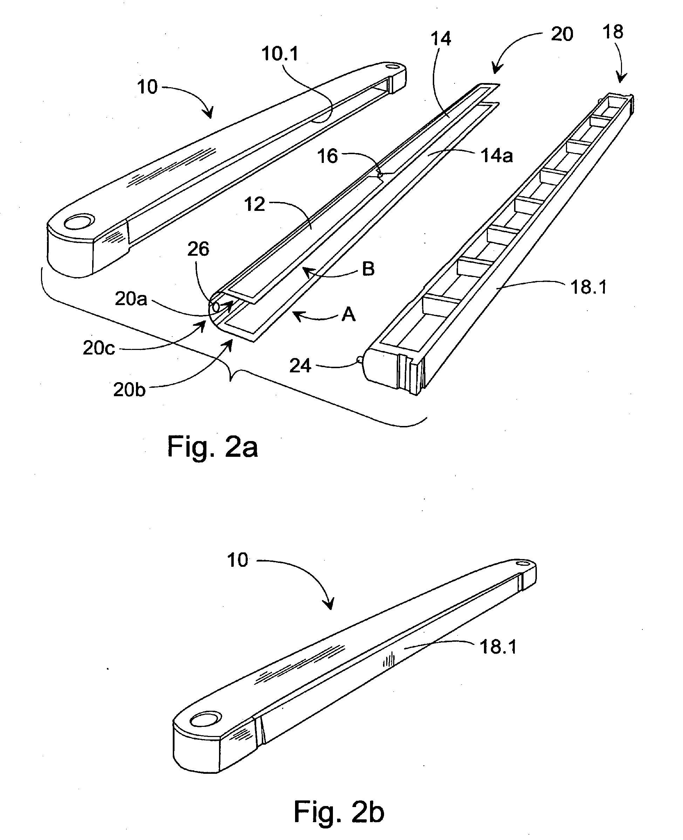

The assembly of Figure 2a shows a second structure of an RFID transponder, which is based on a known dipole structure and a separate ground plane against the base. In this case, the radiator 12 and the ground element 14 are on the plane B with the chip 16 (part 20c of the foil 20). The electrically separate ground plane 14a is on plane A (part 20b of the foil 20). The fold 20a remains between these parts. A foil of this kind can be easily installed in the same way as above on top of the frame 18 and a rugged transponder structure created, Figure 2b.

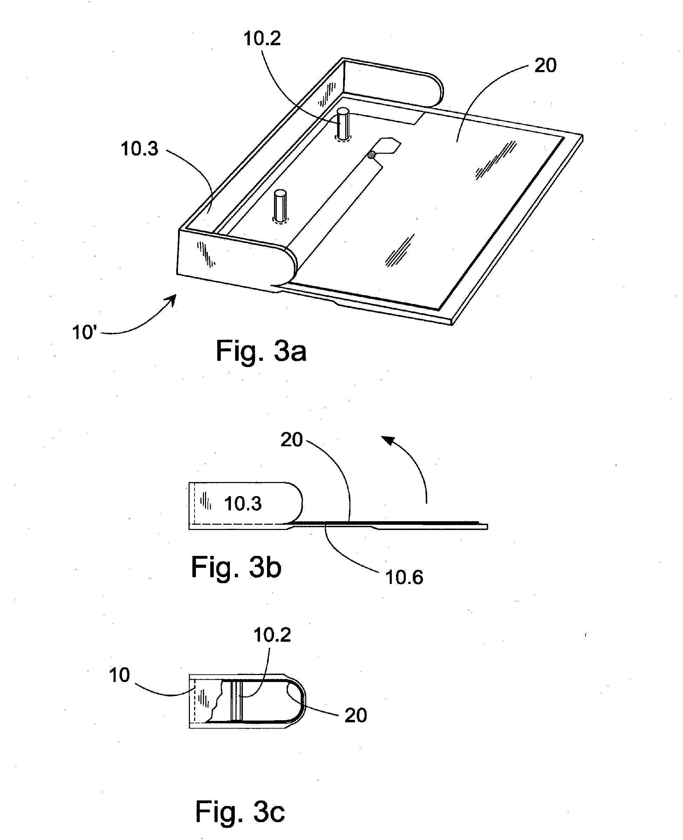

According to Figure 3a, the blank 10' for an RFID transponder can be manufactured by injection moulding, in such a way that the foil 20 is placed ready in the mould. In the blank there is a base plane and sides 10.3, as well as spacer pieces 10.2. One end of the plane can be turned, together with the foil, on top of the sides 10.3 and, for example, the joints welded together using ultrasound, when a transponder 10, installed in a case, will be created, which functionally corresponds to the transponder described above, depending on the electrical structures of the foil. The blank 10' has a thinner section 10.6 in its base plane for turning, see Figs. 3a, 3b and 3c.

In the above, air is used between the planes. It is also possible to use a circuit-board material, or preferably plastic, which acts at the same time as the body of the transponder, as an intermediate substrate.

## Claims

1. RFID transponder,
which includes a radiator (12) and a ground element (14) as opposed antenna elements,
a ground plane (14a) arranged at a distance from the radiator,
and an electrical chip component (16),
and in which the ground plane (14a) is arranged on a first plane (A), and the radiator (12) is arranged on a second plane (B), at a distance from the first plane,
and in which the chip component is connected to the radiator (12) and the ground element (14),
and, further, in which said radiator (12), said ground element (14), and said chip component (16) are installed on a foil (20),
which said foil (20) also comprises the first plane (A) on which said ground plane (14a) is arranged and a fold (20a) between the first and second plane,
the foil (20) being thus divided into a first part (20b) on the first plane (A), the fold (20a), and a second part (20c) on the second plane (B),
**characterized in that** the RFID transponder further includes a case (10) and an intermediate structure (18, 10.2)
and **in that** said intermediate structure (18,10.2) is connected to the case (10), for supporting the first part (20b) and the second part (20c) of the foil (20) on the said first plane (A) and second plane (B), respectively.

2. RFID transponder according to Claim 1, **characterized in that** the ground element (14) is connected to the radiator (12) by a transmission line (19) running through the fold (20a).

3. RFID transponder according to Claim 1 or 2, **characterized in that** the foil is attached to the inner surface of the case, the said intermediate structure (10.2) thus being formed by the actual case.

4. RFID transponder according to Claim 1 or 2, **characterized in that** the foil (20) is supported on the internal intermediate structure (18) carried by the case, which determines mechanically the distance of the first and second planes from each other.

5. RFID transponder according to any of Claims 1 - 4, **characterized in that** the intermediate structure (18) is a frame creating mainly air insulation between the first and second planes.

6. RFID transponder according to any of Claims 1 - 4, **characterized in that** the intermediate structure (18) is a board, which has a chosen dielectric value ε.

7. RFID transponder according to any of Claims 4 - 6, **characterized in that** the intermediate structure (18) is arranged to be pushed in through an opening (10.1) in the wall of the case (10) and the intermediate structure (18) includes a wall (18.1) covering the opening.

8. RFID transponder according to any of Claims 1 - 7, **characterized in that** the length of the electrical components in the direction of the fold is 4/√ε - 15/√ε, in which ε is the dielectric value of the substance between the first and second planes.

9. Blank for creating an RFID transponder, which blank includes
- a case-component blank (10') having a base plane with a planar area, spacer pieces (10.2) and side elements (10.-3) at its edges in the first end of the planar area, and
- a foil (20) formed on the planar area of the base plane, on which foil there are installed
- a ground plane (14a) and a ground element (14) in the other end of the planar area
- a radiator (12) in the first end of the planar area
- a two-terminal chip component (16) connected to the radiator (12), and
wherein the case-component blank (10') is, together with the foil (20), arranged to be folded in two, to form a closed case (10) so that the ground plane (14a) is arranged opposite the radiator (12) at a distance from each other.

10. Blank according to Claim 9 for creating an RFID transponder, **characterized in that** the blank (10') of the case component is an injection-moulded piece.

11. Method of manufacturing an RFID transponder according to Claim 1, in which the transponder is assembled from prefabricated components, which include the case (10), the intermediate structure (18), the foil (20) and the electrical components installed on the foil (20), the method comprising:
- folding the foil (20) around the intermediate structure (18) so that the foil (20) is folded into a U shape with the radiator (12) arranged opposite the ground plane (14a) at a distance from each other,
- pushing the intermediate structure (18) with the foil (20) into the case (10) and
- attaching the intermediate structure (18) to the case (10).

12. Method of manufacturing an RFID transponder according to Claim 1, in which the transponder is assembled from prefabricated components, which include the foil (20) and the electrical components installed on the foil (20), the method comprising:
- manufacturing a case blank (10') by injection-moulding as an essentially planar object with the foil located as an inlay component in the mould before moulding and
- folding the case blank (10') with the foil (20) in two so that the radiator (12) is arranged opposite the ground plate (14a) at a distance from each other and
- closing the joints of the case blank (10') in order to create a closed case (10).

## Patentansprüche

1. RFID-Transponder,
der einen Strahler (12) und ein Erdungselement (14) als gegenüberliegend angeordnete Antennenelemente,
eine Erdungsfläche (14a) in einem Abstand zum Strahler angeordnet,
und ein elektrisches Chip-Bauteil (16) umfasst,
und in dem die Erdungsfläche (14a) auf einer ersten Fläche (A) angeordnet ist, und der Strahler (12) auf einer zweiten Fläche (B) in einem Abstand zur ersten Fläche angeordnet ist,
und in dem das Chip-Bauteil mit dem Strahler (12) und dem Erdungselement (14) verbunden ist,
und überdies besagter Strahler (12), besagtes Erdungselement (14)
und besagtes Chip-Bauteil (16) auf einer Folie (20) installiert sind,
bei der die besagte Folie (20) auch die erste Fläche (A) umfasst, auf der die besagte Erdungsfläche (14a) angeordnet ist sowie eine Falz (20a) zwischen der ersten und zweiten Fläche, die Folie (20) dadurch an der Falz (20a) in einen ersten Teil (20b) auf der ersten Fläche (A) geteilt ist und in einen zweiten Teil (20c) auf der zweiten Fläche (B),
**dadurch gekennzeichnet, dass** der RFID-Transponder überdies ein Gehäuse (10) sowie eine zwischenliegende Struktur (18, 10.2) umfasst
und die besagte zwischenliegende Struktur (18, 10.2) mit dem Gehäuse (10) verbunden ist, um den ersten Teil (20b) und den zweiten Teil (20c) der Folie (20) entsprechend auf der ersten Fläche (A) und der zweiten Fläche (B) zu stützen.

2. RFID-Transponder gemäß dem Patentanspruch 1, **dadurch gekennzeichnet, dass** das Erdungselement (14) über eine Übertragungsleitung (19), die durch die Falz (20a) verläuft, mit dem Strahler verbunden (12) ist.

3. RFID-Transponder gemäß dem Patentanspruch 1 oder 2, **dadurch gekennzeichnet, dass** die Folie auf der Innenfläche des Gehäuses aufgebracht ist, wobei die besagte zwischenliegende Struktur (10.2) durch das Gehäuse gebildet wird.

4. RFID-Transponder gemäß dem Patentanspruch 1 oder 2, **dadurch gekennzeichnet, dass** die Folie (20) auf der inneren, durch das Gehäuse getragenen zwischenliegenden Struktur (18) gestützt wird, wodurch mechanisch der Abstand zwischen der ersten und der zweiten Ebene zueinander bestimmt wird.

5. RFID-Transponder gemäß einem der Patentansprüche 1 - 4, **dadurch gekennzeichnet, dass** die zwischenliegende Struktur (18) einen Rahmen darstellt, der in der Hauptsache eine Luftisolierung zwischen der ersten und zweiten Fläche erzeugt.

6. RFID-Transponder gemäß einem der Patentansprüche 1 - 4, **dadurch gekennzeichnet, dass** die zwischenliegende Struktur (18) eine Platine ist, die einen ausgewählten dielektrischen Wert ε aufweist.

7. RFID-Transponder gemäß einem der Patentansprüche 4 - 6, **dadurch gekennzeichnet, dass** die zwischenliegende Struktur (18) so angeordnet ist, dass sie durch eine Öffnung (10.1) in der Wand des Gehäuses (10) nach innen gedrückt werden kann und die zwischenliegende Struktur (18) eine die Öffnung abdeckende Wand (18.1) umfasst.

8. RFID-Transponder gemäß einem der Patentansprüche 1 - 7, **dadurch gekennzeichnet, dass** die Länge der elektrischen Komponenten in Richtung der Falz 4/√ε - 15/√ε entspricht, wobei ε den dielektrischen Wert der Materie zwischen der ersten und der zweiten Fläche wiedergibt.

9. Rohling für die Formung eines RFID-Transponders, wobei zum Rohling gehören
- ein Rohling (10') für die Gehäusekomponente mit einer Grundfläche mit einem ebenen Bereich, Distanzstücken (10.2) und Seitenelementen (10.3) an seinen Rändern am ersten Ende des ebenen Bereichs, und
- eine Folie (20), geformt auf dem ebenen Bereich der Grundfläche, auf der wiederum angebracht sind
- eine Erdungsfläche (14a) und ein Erdungselement (14) am anderen Ende des ebenen Bereichs
- ein Strahler (12) am ersten Ende des ebenen Bereichs
- eine am Strahler (12) befestigte doppelpolige Chip-Komponente (16), und
worin sich der Rohling (10') für die Gehäusekomponente befindet, gemeinsam mit der Folie (20) in zwei Hälften gefaltet, dass sie ein geschlossenes Gehäuse (10) bildet, sodass die Erdungsfläche (14a) gegenüber dem Strahler (12) in einem Abstand zueinander angeordnet ist.

10. Rohling gemäß dem Patentanspruch 9 zur Erstellung eines RFID-Transponders, **dadurch gekennzeichnet, dass** der Rohling (10') für die Gehäusekomponente ein Spritzgussteil ist.

11. Verfahren für die Herstellung eines RFID-Transponders gemäß dem Patentanspruch 1, wonach der Transponder aus vorgefertigten Bauteilen zusammengebaut wird, zu denen das Gehäuse (10), die zwischenliegende Struktur (18), die Folie (20) und die elektrischen Komponenten, die auf der Folie (20) montiert sind, gehören, das Verfahren bestehend aus:
- Faltung der Folie (20) um die zwischenliegende Struktur (18), sodass die Folie (20) in eine U-Form mit dem Strahler (12) gefaltet wird und dabei gegenüber der Erdungsfläche (14a) in einem Abstand zueinander angeordnet ist,
- Drücken der zwischenliegenden Struktur (18) mit der Folie (20) in das Gehäuse (10) und
- Befestigung der zwischenliegenden Struktur (18) an dem Gehäuse (10).

12. Verfahren für die Herstellung eines RFID-Transponders gemäß dem Patentanspruch 1, wonach der Transponder aus vorgefertigten Bauteilen zusammengebaut wird, zu denen die Folie (20) und die elektrischen Komponenten, die auf der Folie (20) montiert sind, gehören, das Verfahren bestehend aus:
- Herstellung eines Gehäuserohlings (10') durch Spritzgießen als ein wesentlich ebenes Objekt mit der Folie, platziert als ein Inlay-Teil in der Gussform vor dem Gießen, und
- Faltung des Gehäuserohlings (10') mit der Folie (20) in zwei Hälften, sodass der Strahler (12) gegenüber der Erdungsfläche (14a) im Abstand zueinander angeordnet ist und
- Schließung der Nahtstellen des Gehäuserohlings (10'), um eine geschlossenes Gehäuse (10) zu schaffen.

## Revendications

1. Transpondeur RFID,
qui comprend un élément rayonnant (12) et un élément terre (14) comme éléments d'antenne opposés,
un plan de terre (14a) disposé à une certaine distance de l'élément rayonnant
et un composant puce électronique (16),
et dans lequel le plan de terre (14a) est disposé sur un premier plan (A), et l'élément rayonnant (12) est disposé sur un second plan (B), à une certaine distance du premier plan, et dans lequel le composant puce électronique est connecté à l'élément rayonnant (12) et à l'élément terre (14),
et dans lequel en outre ledit élément rayonnant (12), ledit élément terre (14)
et ledit composant puce électronique (16) sont installés sur un film (20),
lequel film (20) comprend aussi le premier plan (A) sur lequel ledit plan de terre (14a) est disposé et un pli (20a) entre le premier plan et le second plan,
le film (20) étant ainsi divisé en une première partie (20b) sur le premier plan (A), le pli (20a) et une seconde partie (20c) sur le second plan (B),
**caractérisé en ce que** le transpondeur RFID comprend en outre un boîtier (10) et une structure intermédiaire (18, 10.2) et **en ce que** ladite structure intermédiaire (18, 10.2) est reliée au boîtier (10), pour soutenir respectivement la première partie (20b) et la seconde partie (20c) du film (20) sur ledit premier plan (A) et ledit second plan (B).

2. Transpondeur RFID selon la revendication 1, **caractérisé en ce que** l'élément terre (14) est connecté à l'élément rayonnant (12) par une ligne de transmission (19) qui passe dans le pli (20a).

3. Transpondeur RFID selon la revendication 1 ou 2, **caractérisé en ce que** le film est attaché à la surface intérieure du boîtier, ladite structure intermédiaire (10.2) étant ainsi formée par le boîtier lui-même.

4. Transpondeur RFID selon la revendication 1 ou 2, **caractérisé en ce que** le film (20) s'appuie sur la structure intermédiaire intérieure (18) portée par le boîtier, laquelle détermine mécaniquement la distance entre le premier plan et le second plan.

5. Transpondeur RFID selon l'une quelconque des revendications 1 à 4, **caractérisé en ce que** la structure intermédiaire (18) est un cadre qui sert essentiellement à isoler à l'air le premier et le second plan.

6. Transpondeur RFID selon l'une quelconque des revendications 1 à 4, **caractérisé en ce que** la structure intermédiaire (18) est une plaque qui a une valeur diélectrique choisie ε.

7. Transpondeur RFID selon l'une quelconque des revendications 4 à 6, **caractérisé en ce que** la structure intermédiaire (18) est agencée de sorte à être insérée à travers une ouverture (10.1) dans le paroi du boîtier (10) et la structure intermédiaire (18) comprend un paroi (18.1) qui couvre l'ouverture.

8. Transpondeur RFID selon l'une quelconque des revendications 1 à 7, **caractérisé en ce que** la longueur des composants électriques dans la direction du pli est de 4/√ε à 15/√ε, où ε est la valeur diélectrique du matériau entre le premier plan et le second plan.

9. Ébauche pour créer un transpondeur RFID, laquelle ébauche comprend
- une ébauche pour le composant de boîtier (10') ayant un plan de base avec une surface plane, des éléments de séparation (10.2) et des éléments latéraux (10.3) sur les bords à la première extrémité de la surface plane, et
- un film (20) formé sur la surface plane du plan de base, sur lequel film ont été installés
- un plan de terre (14a) et un élément terre (14) à l'autre extrémité de la surface plane
- un élément rayonnant (12) dans la première extrémité de la surface plane
- un composant puce (16) à deux broches connecté à l'élément rayonnant (12), et
où l'ébauche pour le composant de boîtier (10') est, conjointement avec le film (20), disposée de sorte à être pliée en deux, pour former un boîtier fermé (10) de sorte que le plan de terre (14a) est disposé à l'opposé de l'élément rayonnant (12) à une certaine distance l'un de l'autre.

10. Ébauche selon la revendication 9 pour créer un transpondeur RFID, **caractérisée en ce que** l'ébauche (10') pour le composant de boîtier est une pièce moulée par injection.

11. Méthode pour fabriquer un transpondeur RFID selon la revendication 1, dans laquelle le transpondeur est assemblé à partir de composants préfabriqués incluant le boîtier (10), la structure intermédiaire (18), le film (20) et les composants électriques installés sur le film (20), la méthode consistant à :
- plier le film (20) autour de la structure intermédiaire (18) de sorte que le film (20) est plié en forme de U et l'élément rayonnant (12) est disposé à l'opposé du plan de terre (14a) à une certaine distance l'un de l'autre,
- insérer la structure intermédiaire (18) avec le film (20) dans le boîtier (10) et
- fixer la structure intermédiaire (18) au boîtier (10).

12. Méthode pour fabriquer un transpondeur RFID selon la revendication 1, dans laquelle le transpondeur est assemblé à partir de composants préfabriqués, incluant le film (20) et les composants électriques installés sur le film (20), la méthode consistant à :
- fabriquer une ébauche pour le boîtier (10') par moulage par injection en tant qu'objet essentiellement plan, où le film est placé dans le moule en tant qu'incrustation avant le moulage et
- plier l'ébauche pour le boîtier (10') avec le film (20) en deux de sorte que l'élément rayonnant (12) est disposé à l'opposé du plan de terre (14a) à une certaine distance l'un de l'autre et
- fermer les joints de l'ébauche pour le boîtier (10') pour créer un boîtier fermé (10).
